(19) Europäisches Patentamt

European Patent Office

Office européen des brevets

(11) Veröffentlichungsnummer : **0 285 961 B1**

# EUROPÄISCHE PATENTSCHRIFT

(12)

(45) Veröffentlichungstag der Patentschrift :
**10.04.91 Patentblatt 91/15**

(21) Anmeldenummer : **88105012.4**

(22) Anmeldetag : **28.03.88**

(51) Int. Cl.⁵ : **G01S 11/00,** G01P 13/00

(54) **Infrarotdetektor.**

(30) Priorität : **09.04.87 DE 8705296 U**

(43) Veröffentlichungstag der Anmeldung :
**12.10.88 Patentblatt 88/41**

(45) Bekanntmachung des Hinweises auf die
Patenterteilung :
**10.04.91 Patentblatt 91/15**

(84) Benannte Vertragsstaaten :
**DE GB**

(56) Entgegenhaltungen :
**DE-A- 3 404 402
DE-A- 3 407 426
US-A- 3 536 924
US-A- 3 599 001
US-A- 4 166 955
US-A- 4 179 691**

(73) Patentinhaber : **Heimann GmbH
Weher Köppel 6 Postfach 30 07
W-6200 Wiesbaden 1 (DE)**

(72) Erfinder : **Quad, Reiner, Dr.
Beethovenstrasse 2
W-6204 Taunusstein (DE)**
Erfinder : **Storck, Karlheinz, Dipl.-Ing.
Rheinstrasse 43
W-6223 Lorch 1 (DE)**

(74) Vertreter : **Fuchs, Franz-Josef, Dr.-Ing. et al
Postfach 22 13 17
W-8000 München 22 (DE)**

## Beschreibung

Die Erfindung betrifft einen Infrarotdetektor mit mehreren strahlungsempfindlichen Elementen gemäß dem ersten Teil des Patentanspruches 1.

Ein Infrarotdetektor wird z.B. zum Detektieren von Personen für die Steuerung von Systemen angewendet, z.B. zum automatischen Öffnen von Türen. Es sind Infrarotdetektoren bekannt, die keine Richtungsbewertung besitzen, was dazu führt, daß jede Person im Detektionsbereich einen Steuervorgang, z.B. eine Türöffnung, auslöst. Es besteht daher der Wunsch, die Bewegungsrichtung der Strahlenquelle, z.B. Person, zu detektieren, so daß nur bei bestimmten Bewegungsrichtungen Steuervorgänge ausgelöst werden.

Es sind Strahlungsdetektoren bekannt, die aus mehreren Elementen bestehen und bei denen zum Teil auch eine Detektierung der Bewegungsrichtung erfolgt (US-A-4 166 955, US-A-3 599 001, DE-A-3 407 426, US-A-3 536 924). Die Schaltung zur Detektierung der Bewegungsrichtung ist bei dem Infrarotdetektor gemäß US-A-3 599 001 aus mehreren Rechengliedern (Summierer, Subtrahierer) aufgebaut. In US-A-3 536 924 ist ausgeführt, daß die Bewegungsrichtung durch eine mathematische Berechnung aus den Winkeln, unter denen ein Objekt von einem Detektor erfaßt wird, bestimmt werden kann. Eine entsprechende Schaltung, die auf einer komplizierten mathematischen Analyse basieren müßte, ist nicht offenbart.

Der Erfindung liegt die Aufgabe zugrunde, einen Infrarotdetektor der eingangs genannten Art so auszubilden, daß durch eine einfach aufgebaute Schaltung aufgrund seiner Ausgangssignale eine Richtungserkennung von bewegten Objekten möglich ist.

Diese Aufgabe ist erfindungsgemäß gelöst durch den zweiten Teil des Patentanspruches 1. Bei dem erfindungsgemäßen Infrarotdetektor wird durch eine geeignete Optik die sich bewegende Infrarotquelle, z.B. eine Person, auf die Elemente abgebildet. Der Detektor ist mittels eines Infrarotfilters gegen kurzwellige Strahlung geblockt. Die Detektorelemente erzeugen für die Bewegungsrichtung typische Signalsequenzen, aus denen eine nachgeschaltete Auswerteschaltung die Bewegungsrichtung mit einer vorgegebenen Auslösung von z.B. 45° bestimmt.

Die Erfindung ist nachfolgend anhand eines in der Zeichnung dargestellten Ausführungsbeispieles näher erläutert. Es zeigen :

Fig. 1 einen Infrarotdetektor nach der Erfindung,
Fig. 2 eine Schaltungseinzelheit des Infrarotdetektors gemäß Fig. 1,
Fig. 3 die dem Infrarotdetektor gemäß Fig. 1 zugeordnete, gesamte Auswerteschaltung,
Fig. 4 und 5 verschiedene zeitliche Verläufe für Ausgangssignale des Infrarotdetektors gemäß Fig. 1,
Fig. 6 eine schematische Darstellung des Infrarotdetektors gemäß Fig. 1, und
Fig. 7 eine Tabelle zur Erläuterung der Erfassung der Bewegungsrichtung bei dem Infrarotdetektor gemäß den Figuren 1 und 6.

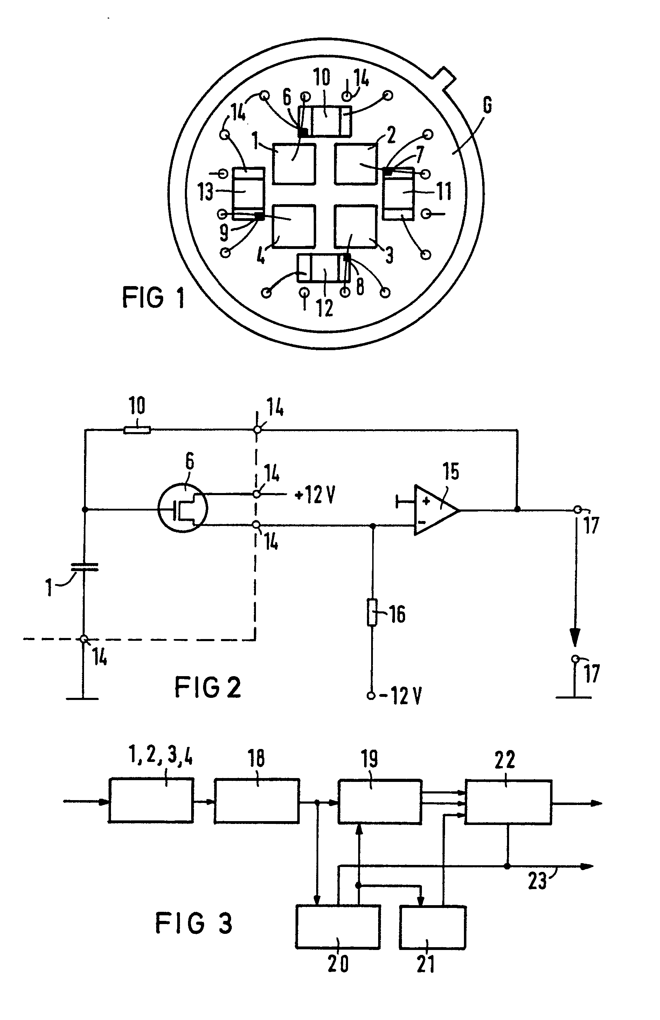

Der Infrarotdetektor gemäß Fig. 1 weist auf einer Grundplatte G vier strahlenempfindliche Elemente 1, 2, 3, 4 auf, die mit Feldeffekttransistoren 6, 7, 8, 9 und hochohmigen Widerständen 10, 11, 12, 13 zusammengeschaltet sind. Der Anschluß des Infrarotdetektors gemäß Fig. 1 erfolgt mit Hilfe von Stiften 14, die von der Grundplatte G wegragen.

In der Fig. 2 ist beispielsweise die dem Element 1 zugeordnete Schaltung dargestellt. Das Element 1 ist in der dargestellten Weise mit dem Feldeffekttransistor 6 und dem hochohmigen Widerstand 10 zusammengeschaltet. Die Anschlüsse der Schaltung sind zu den Stiften 14 geführt. Außerhalb des Gehäuses des Infrarotdetektors gemäß Fig. 1 ist ein Operationsverstärker 15 mit einem Widerstand 16 als Signalverstärker vorgesehen, dessen Ausgangsspannung zwischen zwei Anschlüssen 17 liegt. Auch die anderen Elemente 2, 3, 4 sind in entsprechender Weise geschaltet.

Die Fig. 3 zeigt schematisch die Elemente 1, 2, 3, 4 und die nachgeschaltete Auswerteschaltung mit einem Spitzendetektor 18, einer Abtastschaltung 19, einer Logik 20, einem Verhältnisdetektor 21 und einer Richtungsschaltung 22.

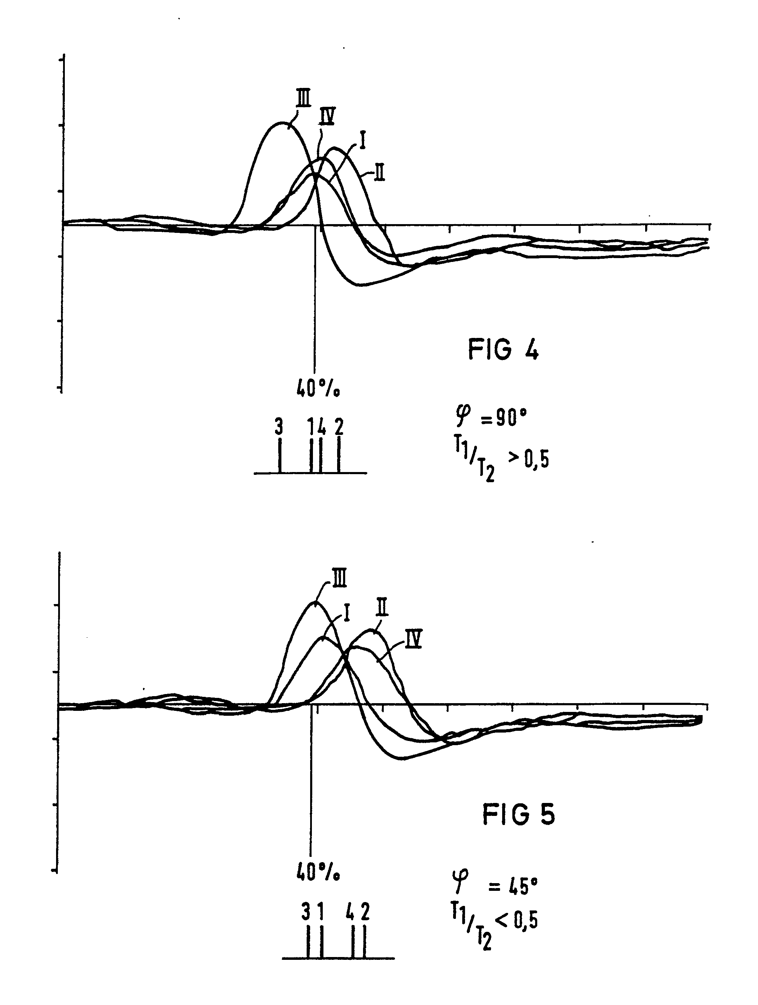

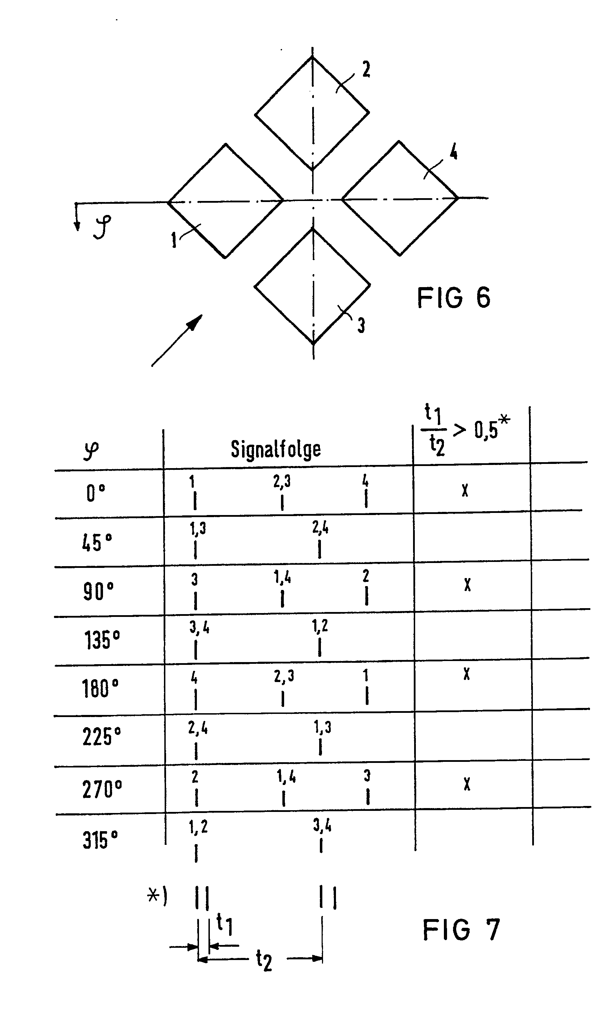

Jedes Element 1, 2, 3, 4, das in Stromverstärkerschaltung betrieben wird, liefert an den Ausgängen 17 des zugeordneten Operationsverstärkers 15 (Fig. 2) Spannungssignale in der zeitlichen Reihenfolge, in der eine Optik den zu detektierenden Körper auf die Elemente 1, 2, 3, 4 abbildet. Die Fig. 4 zeigt dabei beispielsweise für die Bewegungsrichtung beim Winkel $\varphi = 90°$ (Fig. 6) die Ausgangssignale I bis IV der Elemente 1 bis 4. Die Fig. 5 zeigt einen anderen Verlauf der Signale I bis IV für den Winkel $\varphi = 45°$.

Der Spitzendetektor 18 stellt den jeweiligen Maximalwert der Ausgangssignale gemäß den Fig. 4 und 5 fest. Beim Erreichen dieses Maximalwertes jedes Signales wird ein Normpuls ausgegeben. Die Normpulse für die Signale gemäß den Fig. 4 und 5 sind in diesen Figuren für die Detektoren 1 bis 3 in ihrer zeitlichen Folge dargestellt.

Die Logik 20 erzeugt Steuerpulse für die Abtastschaltung 19 und den Verhältnisdetektor 21. Sie führt die vier Normpulse auf eine Signalleitung zusammen. Außerdem detektiert sie nicht auswertbare Signalkombinationen und liefert auf der Leitung 23 die Information "Ende der Folge".

In der Abtastschaltung 19 wird die zeitliche Reihenfolge der von der Logik 20 gelieferten Normpulse gespeichert und für die Richtungsschaltung 22 bereitgehalten.

Mit dem ersten Normpuls wird im Verhältnisdetektor 21 eine linear ansteigende Spannung bei Null Volt gestartet. Die Spannungswerte zum Zeitpunkt des zweiten und dritten Normpulses werden gespeichert und der Quotient aus dem ersten und zweiten Spannungswert gebildet. Ist dieser Quotient größer als 0,5, wird ein bit "high" gesetzt und an die Richtungsschaltung 22 weitergeleitet.

Die Richtungsschaltung 22 bestimmt aus den zwei in der Abtastschaltung 19 gespeicherten Signalen und dem durch den Verhältnisdetektor 21 bereitgestellten bit mit der Information über das Zeitverhältnis t1/t2 (zur 45°-Erkennung) die Bewegungsrichtung des detektierten Objektes. Es wird eine dreistellige Dualzahl ausgegeben, die am Ende einer Signalsequenz die detektierte Richtung in 45°-Abschnitten enthält.

In der Tabelle gemäß Fig. 7 sind für alle acht detektierbaren Bewegungsrichtungen gemäß Fig. 6, d.h. für acht Schritte des Winkels $\phi$, die möglichen Signalfolgen der Normpulse und auch die Informationen über den Zustand des das Zeitverhältnis bestimmenden bits angegeben. Es ergibt sich, daß für jeden Winkel $\phi$ und damit jede detektierbare Bewegungsrichtung eine individuelle Folge von Normpulsen in Verbindung mit einem bestimmten Zeitverhältnis gegeben ist, woraus auf die jeweilige Bewegungsrichtung geschlossen werden kann.

## Ansprüche

1. Infrarotdetektor mit vier strahlungsempfindlichen Elementen (1 bis 4), denen eine Auswerteschaltung (Fig. 3) nachgeschaltet ist, wobei diese Elemente (l bis 4) ein Quadrat begrenzen, **dadurch gekennzeichnet,** daß die Auswerteschaltung (Fig. 3) für jedes Element (1 bis 4) einen Spitzendetektor (18) zur Bildung eines Normpulses beim Maximalwert seines Ausgangssignales aufweist, dem eine Erfassungsschaltung (19 bis 22) zur Bestimmung der Bewegungsrichtung aus der relativen Lage der Normpulse zueinander nachgeschaltet ist.

2. Infrarotdetektor nach Anspruch 1, **dadurch gekennzeichnet,** daß die Erfassungsschaltung (19 bis 22) einen Verhältnisdetektor (21) für das Verhältnis der zeitlichen Abstände der Ausgangsimpulse zueinander aufweist.

## Claims

1. Infrared detector having four radiation-sensitive elements (1 to 4) to which an evaluation circuit (Fig. 3) is connected on the output side, these elements (1 to 4) defining a square, characterised in that the evaluation circuit (Fig. 3) has a peak detector (18) for each element (1 to 4) for forming a normalised pulse upon the occurrence of the maximum value of the element's output signal, to which a detection circuit (19 to 22) is connected on the output side to identify the direction of movement from the relative position of the normalised pulses to each other.

2. Infrared dectector according to claim 1, characterised in that the detection circuit (19 to 22) has a relationship detector (21) for the relationship of the chronological spacings of the output signals with respect to each other.

## Revendications

1. Détecteur à infrarouge comportant quatre éléments (1 à 4) sensibles au rayonnement, en aval desquels est branché un circuit d'évaluation (figure 3) et qui délimitent un carré, caractérisé par le fait que le circuit d'évaluation (figure 3) comporte, pour chaque élément (1 à 4), un détecteur de maximum (18), qui sert à former une impulsion normalisée pour la valeur maximale de son signal de sortie et en aval duquel est branché un circuit de détection (19 à 22) servant à déterminer la direction de déplacement à partir de la position relative des impulsions normalisées.

2. Détecteur à infrarouge suivant la revendication 1, caractérisé par le fait que le circuit de détection (19 à 22) comporte un détecteur de rapport (21) servant à délivrer le rapport des intervalles de temps des impulsions de sortie.

FIG 1

FIG 2

FIG 3

FIG 4

40%

3    14 2

$\varphi = 90°$

$T_1/_{T_2} > 0,5$

FIG 5

40%

3 1   4 2

$\varphi = 45°$

$T_1/_{T_2} < 0,5$

FIG 6

| $\varphi$ | Signalfolge | | | $\dfrac{t_1}{t_2} > 0{,}5^{*}$ | |
|---|---|---|---|---|---|
| 0° | 1 | 2,3 | 4 | X | |
| 45° | 1,3 | 2,4 | | | |
| 90° | 3 | 1,4 | 2 | X | |
| 135° | 3,4 | 1,2 | | | |
| 180° | 4 | 2,3 | 1 | X | |
| 225° | 2,4 | 1,3 | | | |
| 270° | 2 | 1,4 | 3 | X | |
| 315° | 1,2 | 3,4 | | | |

*) $t_1$ $t_2$

FIG 7